Europäisches Patentamt

European Patent Office

Office européen des brevets

(11) Publication number: **0 512 511 A1**

# EUROPEAN PATENT APPLICATION

(21) Application number: **92107645.1**

(22) Date of filing: **06.05.92**

(51) Int. Cl.5: **G01J 3/50**

(30) Priority: **08.05.91 JP 132024/91**

(43) Date of publication of application:
**11.11.92 Bulletin 92/46**

(84) Designated Contracting States:
**DE FR GB**

(71) Applicant: **YOZAN INC.**
**3-5-18, Kitazawa, Setagaya-ku**
**Tokyo 155(JP)**

(72) Inventor: **Yamamoto, Makoto, c/o Yozan Inc.**
**3-5-18, Kitazawa, Setsagaya-ku**
**Tokyo 155(JP)**

(74) Representative: **Patentanwälte Grünecker,**
**Kinkeldey, Stockmair & Partner**
**Maximilianstrasse 58**
**W-8000 München 22(DE)**

(54) **Light detecting system.**

(57) The present invention has the object to provide a light detecting system whose performance of division light into spectrum components is precise and trustworthy.

A light detecting system, comprising a light source for illuminating an object by white light, a slit (1) through which reflected light generated by illuminating object passes through, a prism (2) for dividing the light passing through the slit into spectrum components, light receive equipment (3) for receiving the spectrum components divided by the prism, a normalizing circuit for normalizing the outputs of a plurality of the light receiving equipment within the predetermined range, and an integrator (6) for integrating the output of the normalizing circuit.

FIG. 1

## FIELD OF THE INVENTION

The present invention relates to a light detecting system which detects colors by dividing the reflected light generated by illuminating an object into spectrum components.

## BACKGROUND OF THE INVENTION

Conventionally, spectrum components are detected by dividing colors by a dichroic mirror or a color filter. The result of the division into spectrum components by a dichroic mirror and a color filter is, however, untrustworthy because the optical systems of them are not precise and the performance of them are largely different. It means that the precise detection of spectrum components is difficult by the conventional way. In the field of the remote sensing, each element of a frequency divided spectrally is found. When such a way is performed, the quantity of the data is huge and it takes plenty of time to analyze it.

## SUMMARY OF THE INVENTION

The present invention is invented so as to solve the above problems of the prior art and has an object to provide a light detecting system which analyses precisely and utilizes the analyzed data easily.

A light detecting system according to the present invention detects spectrum components by the steps: i) dividing the reflected light generated by illuminating an object into spectrum components by prism, ii) normalizing the frequency of the divided spectrum, and iii) integrating the normalized frequency by the predetermined area.

## BRIEF DESCRIPTION OF THE PRESENT INVENTION

Fig. 1 shows a block diagram of an embodiment of a light detecting system according to the present invention.

Fig. 2 shows range of wavelength to be integrated around that of R, G, and B.

1 shows a slit, 2 shows a prism, 3 shows a CCD camera (equipment for receiving light), 4 shows a A/D converter, 5 shows a memory and 6 shows a computational means (a normalizing circuit and an integrator).

## PREFERRED EMBODIMENT OF THE PRESENT INVENTION

Hereinafter, an embodiment of the light detecting system according to the present invention is described with reference to the attached drawings.

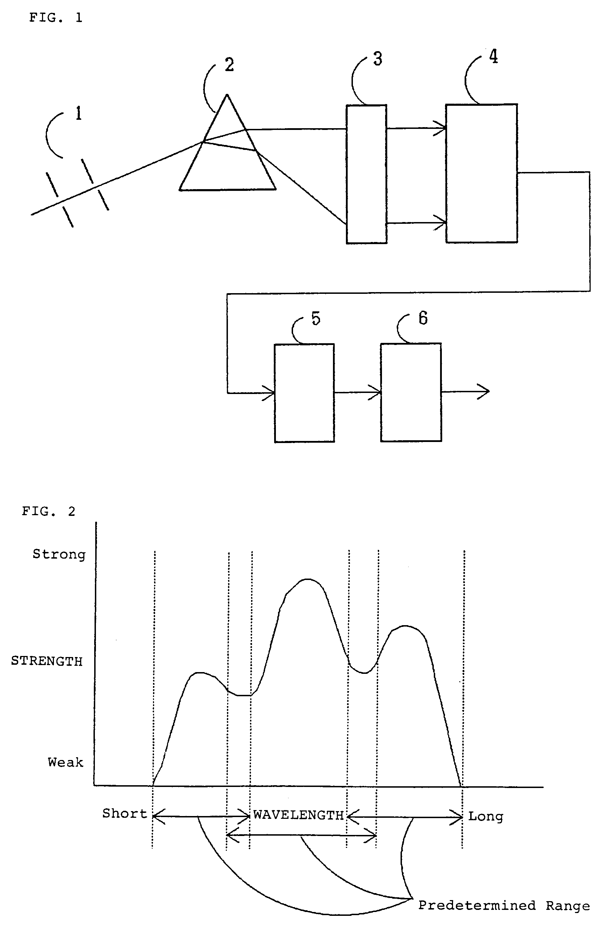

Fig. 1 shows a block diagram of the present invention, which comprises slit 1, prism 2, CCD camera 3, A/D converter 4, memory 5, and computational means 6.

First, the white light illuminated by a light source (not shown in the figure) reflects on the surface of an object. The reflected light makes incidence into the prism through the slit, and makes a spectrum. Fig. 2 shows a table of the wavelength and strength of the spectrum components. The spectrum component is input to an equipment for receiving light which comprises a CCD (Charge Coupled Device).

As the input spectrum is analogue information, it is converted into digital information in order to make later computation easier. The converted information is once stored in the memory. The output from the memory is normalized by the normalizing circuit in the computational means. It is possible to obtain accurate color data by the normalization even if the level of incidence of light itself changes because of the weather, such as fine weather or cloudy weather.

The spectrum data input in this way is integrated by the area of predetermined wavelength by an integrator so as to make correspondence to the wavelength of R, G, and B which are the three primary colors of light. The range for integration is set as shown in Fig. 2. The range is predetermined for the integration around the wavelength of R, G, and B.

A color camera usually divides colors by a dichroic mirror or a color filter. The result of the division into spectrum components is, however, untrustworthy because the optical system of them are not precise and the performance of them are largely different. On the other hand, the result of the division into spectrum components by a prism is trustworthy, which is converted into R, G, and B. Consequently, output data is simple and reproducible enough. It means that it is possible to detect light trustworthily and precisely.

As mentioned above, it is possible to realize precise light detection which is conventionally impossible by a dichroic mirror and a color filter.

## Claims

1. A light detecting system, comprising a light source for illuminating an object by white light, a slit through which reflected light generated by illuminating object passes through, a prism for dividing said light passing through said slit into spectrum components, light receive equipment for receiving said spectrum components divided by said prism, a normalizing circuit for normalizing said outputs of a plurality of said light receiving equipment within said predetermined range, and an integrator for integrating said output of said normalizing circuit.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 834 817 (A. VINNEMANN ET AL.)<br>* column 9, line 6 - line 15; figure 5 *<br>--- | 1 | G01J3/50 |
| Y | US-A-3 942 154 (H. AKAMI ET AL.)<br>* claim 1; figures 3,4 *<br>--- | 1 | |
| Y | EP-A-0 331 629 (GRETAG)<br>* abstract *<br>--- | 1 | |
| A | US-A-3 802 783 (J. F. SIMMONDS ET AL.)<br>* column 1, line 54 - column 2, line 3; figure 1 *<br>--- | 1 | |
| A | EP-A-0 132 342 (CROSFIELD ELECTRONICS)<br>* abstract; figure 4 *<br>--- | 1 | |
| A | PATENT ABSTRACTS OF JAPAN<br>vol. 9, no. 186 (P-377)(1909) 2 August 1985<br>& JP-A-60 057 225 ( YOKOKAWA HOKUSHIN ) 3 April 1985<br>* abstract * | 1 | TECHNICAL FIELDS SEARCHED (Int. Cl.5)<br><br>G01J |

-----

The present search report has been drawn up for all claims

| Place of search | Date of completion of the search | Examiner |
|---|---|---|
| BERLIN | 13 AUGUST 1992 | FUCHS R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)